**Europäisches Patentamt**

**European Patent Office**

**Office européen des brevets**

(11) Veröffentlichungsnummer: **0 191 383 B1**

# EUROPÄISCHE PATENTSCHRIFT

(45) Veröffentlichungstag der Patentschrift: **12.06.91**

(51) Int. Cl.⁵: **B60J 3/02**

(21) Anmeldenummer: **86101292.0**

(22) Anmeldetag: **31.01.86**

(54) **Verfahren zur Herstellung einer Sonnenblende für Kraftfahrzeuge sowie Vorrichtung zur Durchführung des Verfahrens.**

(30) Priorität: **13.02.85 DE 3504971**

(43) Veröffentlichungstag der Anmeldung:
**20.08.86 Patentblatt 86/34**

(45) Bekanntmachung des Hinweises auf die
Patenterteilung:
**12.06.91 Patentblatt 91/24**

(84) Benannte Vertragsstaaten:
**AT BE CH DE FR GB IT LI LU NL SE**

(56) Entgegenhaltungen:
**EP-A- 0 180 699**
**FR-A- 2 394 377**

(73) Patentinhaber: **AUTOPART SWEDEN GMBH**
**Pilotystrasse 4**
**W-8000 München 22(DE)**

(72) Erfinder: **Gercken, Karl**
**Eichleite 16**
**W-8022 Grünwald(DE)**

(74) Vertreter: **Patentanwälte Dr. Solf & Zapf**
**Zeppelinstrasse 53**
**W-8000 München 80(DE)**

## Beschreibung

Beschreibung für die Vertragsstaaten DE, FR, GB, IT und SE

Die Erfindung betrifft einen Haltekörper zur Herstellung einer Sonnenblende für Kraftfahrzeuge unter Verwendung eines Stützkörpers, an dem Haltekörper für eine Lagerachse und einen Lagerzapfen befestigt sind, wobei der Stützkörper mit Polstermaterial umspritzt und der daraus resultierende Polsterkörper gegebenfalls mit einer Umhüllung versehen wird, wobei der Haltekörper Lagerhülsen mit Stecklöchern für den Lagerzapfen und zwischen den Lagerhülsen einen Blindkörper einstückig angeformt aufweist, wobei der Blindkörper als Hülse ausgebildet ist. Ein derartiger Haltekörper ist in der älteren, am 20.08.86 veröffentlichten EP-A-0 180 699, die die Priorität vom 09.11.85 genießt, veranschaulicht, wobei diese Druckschrift gemäß Art. 54(3) und (4) als Stand der Technik für die Vertragsstaaten DE, FR, GB, IT und SE gilt.

Bei Sonnenblenden besteht generell das herstellungstechnische Problem, die Befestigung des Lagerzapfens des Gegenlagers im Polsterkörper so zu bewirken, daß dessen Ummantelung mit der folienartigen Hülle von dem Lagerzapfen nicht behindert wird. Die Umhüllung erfolgt in der Weise, daß der Polsterkörper beidseitig jeweils mit einer Folie belegt und die beiden Folien dann entlang des Randes des Sonnenblendenpolsterkörpers, dessen Kontur folgend, in einem Arbeitsgang miteinander verschweißt werden.

Das vorgenannte Problem wird im Stand der Technik auf zweierlei Weise gelöst. Die eine sieht vor, den Lagerzapfen mit in die folienartige Hülle einzubeziehen, d.h. auch den Lagerzapfen mit der Folie zu umkleiden. Im Gebrauch der Sonnenblende führt dies dazu, daß die Hülle im eingerasteten Zustand der Sonnenblende zwischen dem Gegenlagerkörper und dem Lagerzapfen zu liegen kommt und beim Verschwenken der Sonnenblende dort leicht verzogen und eingerissen werden kann.

Der andere bekannte Weg, das Problem zu lösen, besteht darin, den Lagerzapfen erst nach der Fertigstellung der folienartigen Hülle in dem Lagerkörper zu befestigen, wofür er durch randseitige Öffnungen in der Folie nachträglich in den Polsterkörper, und zwar in einen in diesen eingearbeiteten, seiner Form nach die Umhüllung nicht störenden Haltekörper eingefügt und dabei mit dem Haltekörper verbunden wird. Die Öffnungen in der folienartigen Hülle werden auf einfache Weise mit Hilfe einer Unterbrechung der die beidseitigen Folien verbindenden Schweißnaht gebildet. Nach dem Einsetzen überquert der Lagerzapfen freiliegend die randseitige Ausnehmung in der Sonnenblende.

Die Erfindung befaßt sich mit Sonnenblenden der letztgenannten Art mit freiliegendem Lagerzapfen. In der PCT/EP 82/00186 (Veröffentlichungsnummer WO-A-83/00846 wird eine solche Anordnung beschrieben. Sie weist für den Lagerzapfen einen U-förmigen Haltekörper auf, der im Polstermaterial des Polsterkörpers der Sonnenblende eingebettet ist und Stecklöcher für den Lagerzapfen aufweist. Das Polstermaterial ist von der folienartigen Hülle umgeben, die aus zwei Teilen besteht, die entlang des Sonnenblendenrandes miteinander verschweißt sind.

Bei der Herstellung derartiger Sonnenblenden wird z.B. ein Drahtrahmen erstellt, an dem der Haltekörper für die mit dem Fahrzeugrahmen in Verbindung stehende Lagerachse und der Haltekörper für den Lagerzapfen des Gegenlagers befestigt werden, so daß ein Stützkörper für die Sonnenblende gebildet wird. Der Stützkörper wird im Nest einer Spritzgußform gelagert und mit Kunststoff (Polstermaterial) ummantelt, wobei die Stecklöcher des Lagerzapfen-Haltekörpers für das Einsetzen des Lagerzapfens frei bleiben müssen. Es folgt, wie oben beschrieben, die Umhüllung mit der folienartigen Hülle, wobei dafür Sorge getragen werden muß, daß Schlitze im Bereich der Stecklöcher des Lagerzapfen-Haltekörpers offen bleiben, weil andernfalls die Montage des Lagerzapfens erschwert wird und außerdem auch optisch die Verarbeitung unsauber aussieht, wenn der Lagerzapfen durch die Schweißnaht der Hülle gestoßen worden ist.

In der Praxis gelingt das Freihalten der Stecklöcher des Lagerzapfen-Haltekörpers und das Offenlassen der Schweißnaht nicht befriedigend. Die Folge davon ist, daß eine erhebliche Nachbearbeitung erforderlich ist. Aber auch die Nachbearbeitung erbringt keine saubere Verarbeitung.

Aus der älteren europäischen Patentanmeldung EP-A-0 180 699 ist ein Haltekörper der eingangs angegebenen Art zu entnehmen, zwischen dessen Lagerhülsen ein heraustrennbarer Blindkörper in Form einer Hülse einstückig angeformt ist. Durch diesen Blindkörper sind die Stecklöcher vor Verunreinigungen beim Herstellen des Polsterkörpers bzw. vor einer Abdeckung durch die gegebenenfalls vorhandene Umhüllung geschützt. Nach der Herstellung der Sonnenblende wird der Blindkörper herausgetrennt, wodurch die Stecklöcher zugänglich sind.

Der Erfindung liegt die Aufgabe zugrunde, einen Haltekörper der eingangs angegebenen Art so auszugestalten, daß der Blindkörper leicht herausgetrennt werden kann.

Diese Aufgabe wird durch die Merkmale des Hauptanspruchs gelöst. Vorteilhafte Weiterbildungen der Erfindung werden in den Unteransprüchen gekennzeichnet.

Es wird darauf hingewiesen, daß die ältere EP-A-0 180 699 für die Frage der erfinderischen Tätigkeit nicht von Bedeutung ist (Art. 56 in Verbindung mit Art. 54(3) und (4) E.P.Ü.).

Anhand der Zeichnung wird die Erfindung beispielhaft näher erläutert. Es zeigen:

Fig. 1    eine Draufsicht auf die Sonnenblende,

Fig. 2    einen Teil der Sonnenblende im Querschnitt entlang der Schnittlinie II-II in Fig. 1,

Fig. 3    einen Teil der Sonnenblende im Querschnitt entlang der Schnittlinie III-III in Fig. 1,

Fig. 4    eine Draufsicht auf einen Teilbereich des Stützkörpers der Sonnenblende.

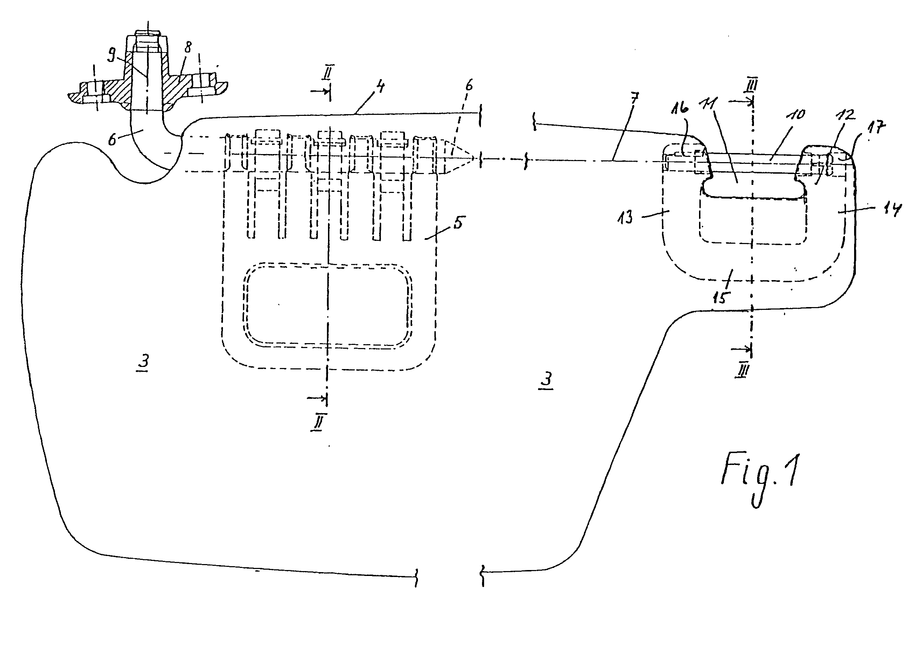

Die in den Fig. 1 bis 3 dargestellte Sonnenblende ist in üblicher Weise als Polsterkörper ausgebildet. Das Polstermaterial 2 ist von einer folienartigen Hülle 3 umschlossen, wobei die Schweißnaht entlang des Sonnenblendenrandes verläuft.

Nahe dem in Fig. 1 linken Ende des Sonnenblendenlängsrandes 4 ist innerhalb der Hülle 3 und des Polstermaterials ein Klemmlager 5 angeordnet, das in dem Polstermaterial 2 verankert ist. Das Klemmlager 5 sitzt klemmend auf einer fahrzeuggebundenen Lagerachse 6, um deren Mittelachse 7 die Sonnenblende 1 gegen den vom Klemmlager 5 vermittelten Widerstand verschwenkbar ist. Die Lagerachse 6 ist außerhalb des Polsterkörpers etwa rechtwinklig abgebogen und mit dem abgebogenen Ende in einem am Fahrzeug befestigten Lagerböckchen 8 um die Mittelachse 9 ihres abgewinkelten Abschnitts schwenkbar gelagert.

Am anderen für den Betrachter der Fig. 1 rechten Ende befindet sich in der Flucht der Mittelachse 7 der Lagerachse 6 ein Gegenlagerzapfen 10, der eine randseitige Ausnehmung 11 in der Sonnenblende überbrückt und wie die Lagerachse 6 zum Sonnenblendenlängsrand etwa parallel verläuft. Der Lagerzapfen 10 ist an einem den Haltekörper bildenden, Haltebügel 12 fixiert, der ebenfalls innerhalb der Hülle 3 im Polstermaterial 2 der Sonnenblende 1 befestigt ist.

Der Lagerzapfen 10 ist etwa senkrecht zu seiner Erstreckung in einem in der Zeichnung nicht dargestellten fahrzeuggebundenen Gegenlagerböckchen elastisch sowie lösbar einrastbar und bestimmt im eingerasteten Zustand zusammen mit dem aus dem Klemmlager 5 und der Lagerachse 6 bestehenden Gelenk eine fahrzeugfeste Drehachse für die Sonnenblende.

Der vollständig in das Polstermaterial innerhalb der folienartigen Umhüllung 3 eingebettete und darin festgelegte Haltebügel 12 weist eine U-förmige Gestalt auf mit seitlichen Schenkeln 13 und 14 und einem diese verbindenden Quersteg 15. Nahe bei den freien Enden der Schenkel 13 und 14 befinden sich Lagerhülsen 16a, 17a mit Stecklöchern 16 bzw. 17 für den Lagerzapfen 10. Die Hülsen 16a und 17a weisen Mittel auf, um den Lagerzapfen 10 nach dem Einsetzen in axialer Richtung zu fixieren und gegen Verdrehen zu sichern. Derartige Einrichtungen werden in der PCT/EP 82/00186 (Veröffentlichungsnummer WO-A-83/00846) beschrieben. Demnach sollen im eingebauten Zustand des Haltebügels 12 mit den Stecklöchern 16 und 17 im Schweißnahtbereich gelegene, jeweils durch eine Unterbrechung in der Schweißnaht gebildete Öffnungen in der folienartigen Hülle fluchten, durch die hindurch der Lagerzapfen 10 in die Stecklöcher 16 und 17 einsetzbar sein soll. Das Einsetzen geschieht in der Weise, daß zunächst das eine Ende des Lagerzapfens 10 in das Steckloch 16 eingeschoben wird, bis der Kopf des anderen Endes des Lagerzapfens 10 in die Flucht des Stecklochs 17 gebracht werden kann. Dann wird der Lagerzapfen 10 auch in das rechte Steckloch 17 eingeführt, und zwar soweit, bis sich eine Schnappverbindung zwischen dem Lagerzapfen 10 und dem Steckloch 17 ergibt.

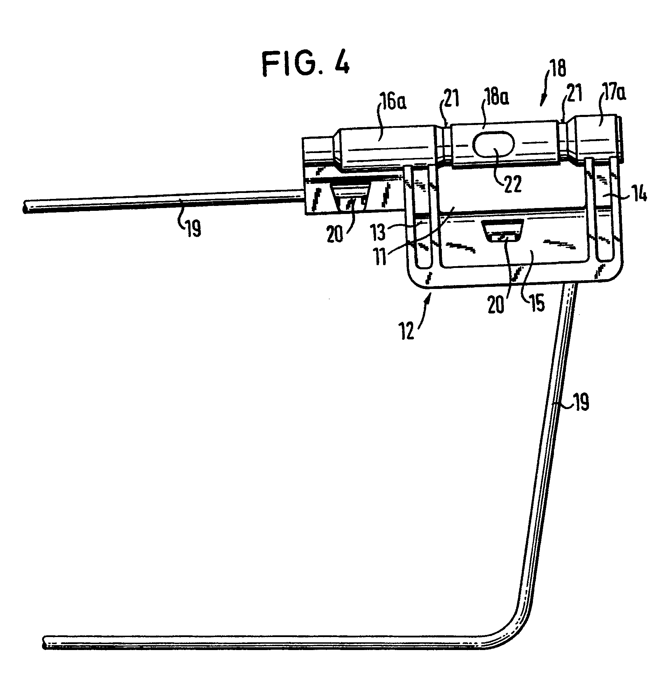

Damit mit Sicherheit beim Spritzen des Polsterkörpers die Stecköffnungen 16 und 17 in den Lagerhülsen 16a und 17a des Haltebügels 12 frei bleiben und Steckschlitze in der Schweißnaht verbleiben, ist ein Haltebügel 12 aus Kunststoff vorgesehen, der einen Blindkörper 18 zwischen den Lagerhülsen 16a und 17a aufweist. Fig. 4 zeigt einen solchen Haltebügel 12, der am Drahtrahmen 19, von dem nur ein Teil dargestellt ist, und der mit dem Haltekörper für die Lagerachse und den Steckzapfen den Stützrahmen für die Sonnenblende bildet, befestigt sitzt, wofür entsprechende Klemmelemente 20 vorgesehen sind.

Der Blindkörper 18 besteht vorzugsweise aus einer einstückig an die Lagerhülsen 16a, 17a angeformten Hülse 18a, die vorzugsweise den gleichen Innen- und Außendurchmesser wie die Lagerhülsen aufweist, wobei zweckmäßigerweise jeweils im Ansatzbereich zwischen der Lagerhülse und der Blindkörperhülse Wandungsverdünnungen in Form von kerb- oder muldenförmigen Ringnuten 21 vorgesehen sind. Diese Ringnuten 21 bilden Sollbruchstellen, wie weiter unten beschrieben wird.

Nach einer weiteren Ausbildungsform der Erfindung ist ein vorzugsweise durchgehendes Loch 22 im Mantel der Blindkörperhülse 18a vorgesehen, in das ein Werkzeug eingesetzt werden kann. Anstelle des Lochs 22 können auch technisch gleichwirkende Werkzeugansatzflächen oder Öffnungen oder Vorsprünge, die die Handhabung ermöglichen, vorgesehen sein.

Die Herstellung der Sonnenblende erfolgt wie üblich, d.h. der Blindkörper 18 bleibt am Haltebügel 12 so lange sitzen, bis der Polsterkörper gespritzt und erhärtet und vorzugsweise sogar, bis die Hülle 3 verschweißt ist. Das Führen der Schweißnaht um den Blindkörper herum ist problemlos und ergibt eine saubere, in seiner Lage definierte Öffnung. Beim Spritzen des Polsterkörpers 2 kann kein Kunststoff in die Stecklöcher dringen, weil der Blindkörper 18 die Stecklöcher schützt, wobei die Spritzform den Blindkörper im Bereich der Ringrillen 21 dichtend umgibt. Sollte dennoch etwas Kunststoffmaterial nach außen auf den Mantel des Blindkörpers 18 dringen, ist dies unerheblich.

Wenn die Umhüllung des Polsterkörpers 2 abgeschlossen ist, wird mit einem Werkzeug z.B. einem Schraubenzieher, der in das Loch 22 gesteckt und gedreht wird, der Blindkörper 18 bzw. die Blindkörperhülse 18a herausgebrochen, wobei die Sollbruchstellen saubere Bruchkanten ergeben und die Stecklöcher 16 und 17 frei werden. Es kann dann der Lagerzapfen 10 in an sich bekannter Weise eingesetzt werden (Siehe zw. die WO-A-83/00846).

Beschreibung für die Vertragsstaaten AT, BE, CH, LI, LU, und NL

Die Erfindung betrifft ein Verfahren zur Herstellung einer Sonnenblende für Kraftfahrzeuge sowie ein Haltekörper zur Durchführung des Verfahrens, wobei das Verfahren sowie die Haltekörper denjenigen nach den WO-A-83/00846 gattungsgemäß ausgebildet sind.

Bei Sonnenblenden besteht generell das herstellungstechnische Problem, die Befestigung des Lagerzapfens des Gegenlagers im Polsterkörper so zu bewirken, daß dessen Ummantelung mit der folienartigen Hülle von dem Lagerzapfen nicht behindert wird. Die Umhüllung erfolgt in der Weise, daß der Polsterkörper beidseitig jeweils mit einer Folie belegt und die beiden Folien dann entlang des Randes des Sonnenblendenpolsterkörpers, dessen Kontur folgend, in einem Arbeitsgang miteinander verschweißt werden.

Das vorgenannte Problem wird in Stand der Technik auf zweierlei Weise gelöst. Die eine sieht vor, den Lagerzapfen mit in die folienartige Hülle einzubeziehen, d.h. auch den Lagerzapfen mit der Folie zu umkleiden. Im Gebrauch der Sonnenblende führt dies dazu, daß die Hülle im eingerasteten Zustand der Sonnenblende zwischen dem Gegenlagerkörper und dem Lagerzapfen zu liegen kommt und beim Verschwenken der Sonnenblende dort leicht verzogen und eingerissen werden kann.

Der andere bekannte Weg, das Problem zu lösen, besteht darin, den Lagerzapfen erst nach der Fertigstellung der folienartigen Hülle in dem Lagerkörper zu befestigen, wofür er durch randseitige Öffnungen in der Folie nachträglich in den Polsterkörper, und zwar in einen in diesen eingearbeiteten, seiner Form nach die Umhüllung nicht störenden Haltekörper eingefügt und dabei mit dem Haltekörper verbunden wird. Die Öffnungen in der folienartigen Hülle werden auf einfache Weise mit Hilfe einer Unterbrechung der die beidseitigen Folien verbindenden Schweißnaht gebildet. Nach dem Einsetzen überquert der Lagerzapfen freiliegend die randseitige Ausnehmung in der Sonnenblende.

Die Erfindung befaßt sich mit Sonnenblenden der letztgenannten Art mit freiliegendem Lagerzapfen. In der PCT/EP 82/00186 (Veröffentlichungsnummer WO-A-83/00846) wird eine solche Anordnung beschrieben. Sie weist für den Lagerzapfen einen U-förmigen Haltekörper auf, der im Polstermaterial des Polsterkörpers der Sonnenblende eingebettet ist und Stecklöcher für den Lagerzapfen aufweist. Das Polstermaterial ist von der folienartigen Hülle umgeben, die aus zwei Teilen besteht, die entlang des Sonnenblendenrandes miteinander verschweißt sind.

Bei der Herstellung derartiger Sonnenblenden wird z.B. ein Drahtrahmen erstellt, an dem der Haltekörper für die mit dem Fahrzeugrahmen in Verbindung stehende Lagerachse und der Haltekörper für den Lagerzapfen des Gegenlagers befestigt werden, so daß ein Stützkörper für die Sonnenblende gebildet wird. Der Stützkörper wird im Nest einer Spritzgußform gelagert und mit Kunststoff (Polstermaterial) ummantelt, wobei die Stecklöcher des Lagerzapfen-Haltekörpers für das Einsetzen des Lagerzapfens frei bleiben müssen. Es folgt, wie oben beschrieben, die Umhüllung mit der folienartigen Hülle, wobei dafür Sorge getragen werden muß, daß Schlitze im Bereich der Stecklöcher des Lagerzapfen-Haltekörpers offen bleiben, weil andernfalls die Montage des Lagerzapfens erschwert wird und außerdem auch optisch die Verarbeitung unsauber aussieht, wenn der Lagerzapfen durch die Schweißnaht der Hülle gestoßen worden ist.

In der Praxis gelingt das Freihalten der Stecklöcher des Lagerzapfen-Haltekörpers und das Offenlassen der Schweißnaht nicht befriedigend. Die Folge davon ist, daß eine erhebliche Nachbearbeitung erforderlich ist. Aber auch die Nachbearbeitung erbringt keine saubere Verarbeitung.

Bei einer in der FR-A-2 394 377 beschriebenen Sonnenblende für Kraftfahrzeuge kommen Haltekörper für eine Lagerachse und einen Lagerzapfen zum Einsatz, die nicht Teile eines in die Sonnenblende eingebetteten Stützkörpers sind. Bei einer solchen Ausgestaltung bedarf es deshalb einer besonderen Halterung bzw. Positionierung der Haltekörper während des Ausschäumens. Zur Positionierung des für die Lagerachse bestimmten Haltekörpers dient ein zylindrischer Positionierabschnitt in Form einer Verlängerung dieses Haltekörpers, der während des Ausschäumens zwischen Aufnahmen des Werkzeugober- und Werkzeugunterteils gehalten ist und somit zur Positionierung dieses Haltekörpers beiträgt. Da der Positionierabschnitt nur für das Ausschäumen der Sonnenblende erforderlich ist, kann er nach der Fertigstellung des Aufschäumens an einer Sollbruchstelle abgebrochen werden. Für den Lagerzapfen ist bei dieser bekannten Ausgestaltung kein Haltekörper vorgesehen. Es werden nämlich die in den Form-Hohlraum ragenden Enden des Lagerzapfens beim Ausschäumen eingeschäumt, wobei der Lagerzapfen dadurch positioniert wird, daß sein Mittelabschnitt zwischen Aufnahmen des Werkzeugober- und Werkzeugunterteils gehalten wird.

Aufgabe der Erfindung ist, ein Verfahren und/oder ein Haltekörper zur Herstellung einer Sonneblende für Kraftfahrzeuge zu schaffen, mit denen es gelingt, die Stecköffnungen des Lagerzapfen-Haltekörpers bei der Herstellung des Polsterkörpers und der Umhüllung freizuhalten.

Diese Aufgabe wird durch die Merkmale des Anspruchs 1 bzw. 2 gelöst. Vorteilhafte Weiterbildungen der Erfindung werden in den Unteransprüchen gekennzeichnet.

Anhand der Zeichnung wird die Erfindung beispielhaft näher erläutert. Es zeigen:

Fig. 1    eine Draufsicht auf die Sonnenblende,

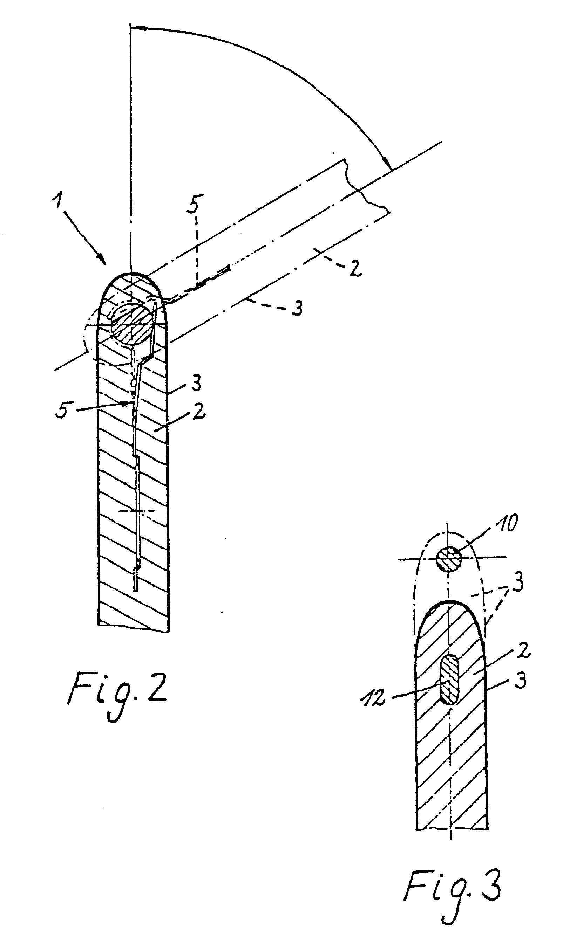

Fig. 2    einen Teil der Sonnenblende im Querschnitt entlang der Schnittlinie II-II in Fig. 1,

Fig. 3    einen Teil der Sonnenblende im Querschnitt entlang der Schnittlinie III-III in Fig. 1,

Fig. 4    eine Draufsicht auf einen Teilbereich des Stützkörpers der Sonnenblende.

Die in den Fig. 1 bis 3 dargestellte Sonnenblende ist in üblicher Weise als Polsterkörper ausgebildet. Das Polstermaterial 2 ist von einer folienartigen Hülle 3 umschlossen, wobei die Schweißnaht entlang des Sonnenblendenrandes verläuft.

Nahe dem in Fig. 1 linken Ende des Sonnenblendenlängsrandes 4 ist innerhalb der Hülle 3 und des Polstermaterials ein Klemmlager 5 angeordnet, das in dem Polstermaterial 2 verankert ist. Das Klemmlager 5 sitzt klemmend auf einer fahrzeuggebundenen Lagerachse 6, um deren Mittelachse 7 die Sonnenblende 1 gegen den vom Klemmlager 5 vermittelten Widerstand verschwenkbar ist. Die Lagerachse 6 ist außerhalb des Polsterkörpers etwa rechtwinklig abgebogen und mit dem abgebogenen Ende in einem am Fahrzeug befestigten Lagerböckchen 8 um die Mittelachse 9 ihres abgewinkelten Abschnitts schwenkbar gelagert.

Am anderen für den Betrachter der Fig. 1 rechten Ende befindet sich in der Flucht der Mittelachse 7 der Lagerachse 6 ein Gegenlagerzapfen 10, der eine randseitige Ausnehmung 11 in der Sonnenblende überbrückt und wie die Lagerachse 6 zum Sonnenblendenlängsrand etwa parallel verläuft. Der Lagerzapfen 10 ist an einem den Haltekörper bildenden, Haltebügel 12 fixiert, der ebenfalls innerhalb der Hülle 3 im Polstermaterial 2 der Sonnenblende 1 befestigt ist.

Der Lagerzapfen 10 ist etwa senkrecht zu seiner Erstreckung in einem in der Zeichnung nicht dargestellten fahrzeuggebundenen Gegenlagerböckchen elastisch sowie lösbar einrastbar und bestimmt im eingerasteten Zustand zusammen mit dem aus dem Klemmlager 5 und der Lagerachse 6 bestehenden Gelenk eine fahrzeugfeste Drehachse für die Sonnenblende.

Der vollständig in das Polstermaterial innerhalb der folienartigen Umhüllung 3 eingebettete und darin festgelegte Haltebügel 12 weist eine U-förmige Gestalt auf mit seitlichen Schenkeln 13 und 14 und einem diese verbindenden Quersteg 15. Nahe bei den freien Enden der Schenkel 13 und 14 befinden sich Lagerhülsen 16a, 17a mit Stecklöchern 16 bzw. 17 für den Lagerzapfen 10. Die Hülsen 16a und 17a weisen Mittel auf, um den Lagerzapfen 10 nach dem Einsetzen in axialer Richtung zu fixieren und gegen Verdrehen zu sichern. Derartige Einrichtungen werden in der PCT/EP 82/00186 (Veröffentlichungsnummer WO 83/00846) beschrieben. Demnach sollen im eingebauten Zustand des Haltebügels 12 mit den Stecklöchern 16 und 17 im Schweißnahtbereich gelegene, jeweils durch eine Unterbrechung in der Schweißnaht gebildete Öffnungen in der folienartigen Hülle fluchten, durch die hindurch der Lagerzapfen 10 in die Stecklöcher 16 und 17 einsetzbar sein soll. Das Einsetzen geschieht in der Weise, daß zunächst das eine Ende des Lagerzapfens 10 in das Steckloch 16 eingeschoben wird, bis der Kopf des anderen Endes des Lagerzapfens 10 in die Flucht des Stecklochs 17 gebracht werden kann. Dann wird der Lagerzapfen 10 auch in das rechte Steckloch 17 eingeführt, und zwar soweit, bis sich eine Schnappverbindung zwischen dem Lagerzapfen 10 und dem Steckloch 17 ergibt.

Damit mit Sicherheit beim Spritzen des Polsterkörpers die Stecköffnungen 16 und 17 in den Lagerhülsen 16a und 17a des Haltebügels 12 frei bleiben und Steckschlitze in der Schweißnaht verbleiben, sieht die Erfindung einen Haltebügel 12 aus Kunststoff vor, der einen Blindkörper 18 zwischen den Lagerhülsen 16a und 17a aufweist. Fig. 4 zeigt einen solchen Haltebügel 12, der am Drahtrahmen 19, von dem nur ein Teil dargestellt ist, und der mit dem Haltekörper für die Lagerachse und den Steckzapfen den Stützrahmen für die Sonnenblende bildet, befestigt sitzt, wofür entsprechende Klemmelemente 20 vorgesehen sind.

Der Blindkörper 18 besteht vorzugsweise aus einer einstückig an die Lagerhülsen 16a, 17a angeformten Hülse 18a, die vorzugsweise den gleichen Innen- und Außendurchmesser wie die Lagerhülsen aufweist, wobei zweckmäßigerweise jeweils im Ansatzbereich zwischen der Lagerhülse und der Blindkörperhülse Wandungsverdünnungen in Form von kerb- oder muldenförmigen Ringnuten 21 vorgesehen sind. Diese Ringnuten 21 bilden Sollbruchstellen, wie weiter unten beschrieben wird.

Nach einer weiteren Ausbildungsform der Erfindung ist ein vorzugsweise durchgehendes Loch 22 im Mantel der Blindkörperhülse 18a vorgesehen, in das ein Werkzeug eingesetzt werden kann. Anstelle des Lochs 22 können auch technisch gleichwirkende Werkzeugansatzflächen oder Öffnungen oder Vorsprünge, die die Handhabung ermöglichen, vorgesehen sein.

Die Herstellung der Sonnenblende erfolgt wie üblich, d.h. der Blindkörper 18 bleibt am Haltebügel 12 so lange sitzen, bis der Polsterkörper gespritzt und erhärtet und vorzugsweise sogar, bis die Hülle 3 verschweißt ist. Das Führen der Schweißnaht um den Blindkörper herum ist problemlos und ergibt eine saubere, in seiner Lage definierte Öffnung. Beim Spritzen des Polsterkörpers 2 kann kein Kunststoff in die Stecklöcher dringen, weil der Blindkörper 18 die Stecklöcher schützt, wobei die Spritzform den Blindkörper im Bereich der Ringrillen 21 dichtend umgibt. Sollte dennoch etwas Kunststoffmaterial nach außen auf den Mantel des Blindkörpers 18 dringen, ist dies unerheblich.

Wenn die Umhüllung des Polsterkörpers 2 abgeschlossen ist, wird mit einem Werkzeug z.B. einem Schraubenzieher, der in das Loch 22 gesteckt und gedreht wird, der Blindkörper 18 bzw. die Blindkörperhülse 18a herausgebrochen, wobei die Sollbruchstellen saubere Bruchkanten ergeben und die Stecklöcher 16 und 17 frei werden. Es kann dann der Lagerzapfen 10 in an sich bekannter Weise eingesetzt werden (Siehe die WO-A-83/00846).

**Ansprüche**

1. Verfahren zur Herstellung einer Sonnenblende unter Verwendung eines Stützkörpers, an dem Haltekörper (5, 12) für eine Lagerachse (6) und einen Lagerzapfen (10) befestigt sind, wobei der Stützkörper mit Polstermaterial (2) umspritzt und der daraus resultierende Polsterkörper gegebenenfalls mit einer Umhüllung versehen wird, und wobei ein Haltekörper (12) für den Lagerzapfen (10) verwendet wird, der Lagerhülsen (16a, 17a) mit Stecklöchern (16, 17) für den Lagerzapfen aufweist, **dadurch gekennzeichnet**, daß ein Haltekörper verwendet wird, der zwischen den Lagerhülsen (16a, 17a) einen Blindkörper (18) einstückig angeformt aufweist und daß der Blindkörper (18) nach der Erhärtung des Polsterkörpers, vorzugsweise nach der Umhüllung des Polsterkörpers, herausgetrennt z.B. herausgeschnitten oder herausgebrochen wird.

2. Haltekörper insbesondere zur Durchführung des Verfahrens nach Anspruch 1, der Lagerhülsen (16a, 17a) mit Stecklöchern (16, 17) für die Lagerung des Lagerzapfens (10) aufweist, **dadurch gekennzeichnet**, daß zwischen den Lagerhülsen (16a, 17a) ein Blindkörper (18) einstückig angeformt angeordnet ist.

3. Haltekörper nach Anspruch 2, **dadurch gekennzeichnet**, daß der Blindkörper (18) als Hülse (18a) ausgebildet ist.

4. Haltekörper nach Anspruch 2 und/oder 3, **dadurch gekennzeichnet**, daß die Hülse (18a) den gleichen Innen- und Außendurchmesser wie die Lagerhülsen (16a, 17a) aufweist.

5. Haltekörper nach einem oder mehreren der Ansprüche 2 bis 4, **dadurch gekennzeichnet**, daß jeweils im Ansatzbereich zwischen den Lagerhülsen (16a, 17a) und der Blindkörperhülse (18a) Sollbruchstellen vorgesehen sind.

6. Haltekörper nach Anspruch 5, **dadurch gekennzeichnet**, daß die Sollbruchstellen aus Wandungsverdünnungen bestehen.

7. Haltekörper nach Anspruch 6, **dadurch gekennzeichnet**, daß die Wandungsverdünnungen durch kerb- oder muldenförmige Ringnuten (21) gebildet werden.

8. Haltekörper nach einem oder mehreren der Ansprüche 2 bis 7, **dadurch gekennzeichnet**, daß im oder am Mantel der Blindkörperhülse (18a) außerhalb der Spritzformwandung ein Betätigungsmittel für das Herausbrechen der Hülse vorgesehen ist.

9. Haltekörper nach Anspruch 8, **dadurch gekennzeichnet**, daß das Betätigungsmittel ein durchgehendes Loch (22) im Mantel der Blindkörperhülse (18a) ist.

10. Haltekörper nach Anspruch 8, **dadurch gekennzeichnet**, daß das Betätigungsmittel eine Werkzeugansatzfläche auf dem Mantel der Blindkörperhülse (18a) ist.

11. Haltekörper nach Anspruch 8, **dadurch gekennzeichnet**, daß das Betätigungsmittel ein Vorsprung auf dem Mantel der Blindkörperhülse (18a) ist.

Patentansprüche für folgende Vertragsstaaten: DE, FR, GB, IT, SE

1. Haltekörper zur Herstellung einer Sonnenblende für Kraftfahrzeuge unter Verwendung eines Stützkörpers, an dem Haltekörper (5, 12) für eine Lagerachse (6) und einen Lagerzapfen (10) befestigt sind, wobei der Stützkörper mit Polstermaterial umspritzt und der daraus resultierende Polsterkörper (3) gegebenenfalls mit einer Umhüllung versehen wird, wobei der Haltekörper Lagerhülsen (16a, 17a) mit Stecklöchern (16, 17) für den Lagerzapfen (10) und zwischen den Lagerhülsen (16a, 17a) einen Blindkörper (18) einstückig angeformt aufweist, wobei der Blindkörper (18) als Hülse (18a) ausgebildet ist und wobei im oder am Mantel der Blindkörperhülse (18a) außerhalb der Spritzformwandung ein Betätigungsmittel (22) für das Herausbrechen der Hülse vorgesehen ist.

2. Haltekörper nach Anspruch 1, dadurch **gekennzeichnet**, daß die Hülse (18a) den gleichen Innen- und Außendurchmesser wie die Lagerhülsen (16a, 17a) aufweist.

3. Haltekörper nach Anspruch 1 und/oder 2, dadurch **gekennzeichnet**, daß jeweils im Ansatzbereich zwischen den Lagerhülsen (16a, 17a) und der Blindkörperhülse (18a) Sollbruchstellen vorgesehen sind.

4. Haltekörper nach Anspruch 3, dadurch **gekennzeichnet**, daß die Sollbruchstellen aus Wandungsverdünnungen bestehen.

5. Haltekörper nach Anspruch 4, dadurch **gekennzeichnet**, daß die Wandungsverdünnungen durch kerb- oder muldenförmige Ringnuten (21) gebildet werden.

6. Haltekörper nach einem oder mehreren der Ansprüche 1 bis 5, dadurch **gekennzeichnet**, daß das Betätigungsmittel ein durchgehendes Loch (22) im Mantel der Blindkörperhülse (18a) ist.

7. Haltekörper nach einem oder mehreren der Ansprüche 1 bis 5, dadurch **gekennzeichnet**,

daß das Betätigungsmittel eine Werkzeugansatzfläche auf dem Mantel der Blindkörperhülse (18a) ist.

8. Haltekörper nach einem oder mehreren der Ansprüche 1 bis 5, dadurch **gekennzeichnet**, daß das Betätigungsmittel ein Vorsprung auf dem Mantel der Blindkörperhülse (18a) ist.

**Claims**

1. Method of producing a sun visor, using a support body to which holding bodies (5, 12) for a bearing shaft (6) and a journal (10) are fastened, the support body having cushion material (2) injection-moulded around it, and the cushion body resulting therefrom optionally being provided with a covering, a holding body (12) which is used for the journal (10) having bearing sleeves (16a, 17a) with socket holes (16, 17) for the journal, characterised in that a holding body is used which has, integrally formed between the bearing sleeves (16a, 17a), a dummy body (18) and in that, after the hardening of the cushion body, preferably after the covering of the cushion body, the dummy body (18) is separated, for example cut out or broken out.

2. Holding body, in particular for implementing the method according to Claim 1, having bearing sleeves (16a, 17a) with socket holes (16, 17) for the bearing of the journal (10), characterised in that a dummy body (18) is arranged, integrally formed, between the bearing sleeves (16a, 17a).

3. Holding body according to Claim 2, characterised in that the dummy body (18) is designed as a sleeve (18a).

4. Holding body according to Claim 2 and/or 3, characterised in that the sleeve (18a) has the same internal and external diameter as the bearing sleeves (16a, 17a).

5. Holding body according to one or more of Claims 2 to 4, characterised in that intended breaking points are provided in each case in the cavity region between the bearing sleeves (16a, 17a) and the dummy-body sleeve (18a).

6. Holding body according to Claim 5, characterised in that the intended breaking points consist of thinned wall parts.

7. Holding body according to Claim 6, characterised in that the thinned wall parts are formed by notch-shaped or trough-shaped annular grooves (21).

8. Holding body according to one or more of Claims 2 to 7, characterised in that in or on the casing of the dummy-body sleeve (18a) outside the wall of the injection mould an actuating means for the breaking out of the sleeve is provided.

9. Holding body according to Claim 8, characterised in that the actuating means is a through-hole (22) in the casing of the dummy-body sleeve (18a).

10. Holding body according to Claim 8, characterised in that the actuating means is a bearing surface for a tool on the casing of the dummy-body sleeve (18a).

11. Holding body according to Claim 8, characterised in that the actuating means is a projection on the casing of the dummy-body sleeve (18a).

Claims for the following Contracting States: DE, FR, GB, IT and SE

1. Holding body for producing a sun visor for motor vehicles, using a support body to which holding bodies (5, 12) for a bearing shaft (6) and a journal (10) are fastened, the support body being injection-moulded with cushion material, and the cushion body (3) resulting therefrom optionally being provided with a covering, the holding body having integrally formed-on bearing sleeves (16a, 17a) with socket holes (16, 17) for the journal (10) and, between the bearing sleeves (16a, 17a), a dummy body (18), the dummy body (18) being designed as a sleeve (18a) and an actuating means (22) for the breaking off of the sleeve being provided outside the wall of the injection mould, in or on the casing of the dummy-body sleeve (18a).

2. Holding body according to Claim 1, characterised in that the sleeve (18a) has the same internal and external diameter as the bearing sleeves (16a, 17a).

3. Holding body according to Claim 1 and/or 2, characterised in that intended breaking points are provided in each case in the cavity region between the bearing sleeves (16a, 17a) and the dummy-body sleeve (18a).

4. Holding body according to Claim 3, characterised in that the intended breaking points consist of thinned wall parts.

5. Holding body according to Claim 4, characterised in that the thinned wall parts are formed by notch-shaped or trough-shaped annular grooves (21).

6. Holding body according to one or more of Claims 1 to 5, characterised in that the actuating means is a through-hole (22) in the casing of the dummy-body sleeve (18a).

7. Holding body according to one or more of Claims 1 to 5, characterised in that the actuating means is a bearing surface for a tool on the casing of the dummy-body sleeve (18a).

8. Holding body according to one or more of Claims 1 to 5, characterised in that the actuating means is a projection on the casing of the dummy-body sleeve (18a).

**Revendications**

1. Procédé pour la fabrication d'un pare-soleil en utilisant un organe d'appui sur lequel sont fixés des organes de maintien (5, 12) pour un axe support (6) et un pivot support (10), l'organe d'appui étant recouvert par projection de matériau de rembourrage (2) et le corps de rembourrage en résultant étant muni, le cas échéant, d'une gaine, et un organe de maintien (12) étant utilisé pour le pivot support (10) qui présente des douilles de palier (16a, 17a) comportant des trous d'enfichage (16, 17) pour le pivot support (10), caractérisé en ce qu'un organe de maintien est utilisé, qui présente, entre les douilles de palier (16a, 17a), un organe perdu (18) monobloc et de forme ajustée, et en ce que l'organe perdu (18), après le durcissement de l'organe de rembourrage, de préférence après la mise sous gaine de l'organe de rembourrage, est séparé de lui, par exemple en le sectionnant ou en le cassant.

2. organe de maintien, en particulier pour l'exécution du procédé suivant la revendication 1, qui présente des douilles de palier (16a, 17a) comportant des trous d'enfichage (16, 17) pour le montage du pivot support (10), caractérisé en ce qu entre les douilles de palier (16a, 17a), est disposé un organe perdu (18) monobloc et de forme ajustée.

3. Organe de maintien suivant la revendication 2, caractérisé en ce que l'organe perdu (18) est réalisé sous la forme d'une douille (18a).

4. Organe de maintien suivant la revendication 2 et/ou la revendication 3, caractérisé en ce que la douille (18a) présente le même diamètre intérieur et extérieur que les douilles de palier (16a, 17a).

5. Organe de maintien suivant l'une quelconque ou plusieurs des revendications 2 à 4, caractérisé en ce que des points de rupture programmée sont chaque fois prévus entre les douilles de palier (16a, 17a) et l'organe perdu (18).

6. Organe de maintien suivant la revendication 5, caractérisé en ce que les points de rupture programmée sont constitués par des réductions d'épaisseur des parois.

7. Organe de maintien suivant la revendication 6, caractérisé en ce que les réductions d'épaisseur des parois sont réalisées par des rainures annulaires en forme d'encoche ou d'auge.

8. Organe de maintien suivant l'une quelconque ou plusieur des revendications 2 à 7, caractérisé en ce que, dans ou sur la surface externe de l'organe perdu (18), en dehors de la paroi de forme obtenue par projection, un moyen de mise en ooeuvre est prévu pour enlever la douille en la cassant.

9. Organe de maintien suivant la revendication 8, caractérisé en ce que le moyen de mise en oeuvre est un alésage traversant (22) dans la surface externe de la douille (18a) de l'organe perdu.

10. Organe de maintien suivant la revendication 8, caractérisé en ce que moyen de mise en oeuvre est une surface d'épaulement d'outil* sur la surface externe de la douille (18a) de l'organe perdu.

11. Organe de maintien suivant la revendication 8, caractérisé en ce que moyen de mise en oeuvre est une saillie sur la surface externe de la douille (18a) de l'organe perdu.

Revendications pour les Etats contractants suivants: DE, FR, GB, IT et SE

1. Organe de maintien pour la fabrication d'un paresoleil pour véhicules automobiles, en utilisant un organe d'appui, sur lequel sont fixés des organes de maintien (5, 12) pour un axe support (6) et un pivot support (10), l'organe d'appui étant recouvert par projection de matériau de rembourrage et le corps de rembourrage (3) en résultant étant muni, le cas échéant, d'une gaine, l'organe de maintien présentant des douilles de palier (16a, 17a) comportant des trous d'enfichage (16, 17) pour le pivot support (10), et, entre les douilles de palier (16a, 17a), un organe perdu (18) monobloc et de forme ajustée, et et qui est réalisé sous la forme d'une douille (18a), et étant entendu que, dans ou sur la surface externe de l'organe perdu (18), en dehors de la paroi de forme obtenue par projection, un moyen de mise en oeuvre est prévu pour enlever la douille en la cassant.

2. Organe de maintien suivant la revendication 1, caractérisé en ce que la douille (18a) présente le même diamètre intérieur et extérieur que les douilles de palier (16a, 17a).

3. Organe de maintien suivant la revendication 1 et/ou la revendication 2, caractérisé en ce que des points de rupture programmée sont chaque fois prévus entre les douilles de palier (16a, 17a) et l'organe perdu (18).

4. Organe de maintien suivant la revendication 3, caractérisé en ce que les points de rupture programmée sont constitués par des réductions d'épaisseur des parois.

5. Organe de maintien suivant la revendication 4, caractérisé en ce que les réductions d'épaisseur des parois sont réalisées par des rainures annulaires (21) en forme d'encoche ou d'auge.

6. Organe de maintien suivant l'une ou plusieurs des revendications 1 à 5, caractérisé en ce que le moyen de mise en oeuvre est un alésage traversant (22) dans la surface externe de la douille (18a) de l'organe perdu.

7. Organe de maintien suivant l'une des revendications 1 à 5, caractérisé en ce que le moyen de mise en oeuvre est une surface pour appliquer un outil sur la surface externe de la douille (18a) de l'organe perdu.

8. Organe de maintien suivant l'une des revendications 1 à 5, caractérisé en ce que le moyen de mise en oeuvre est une saillie sur la surface externe de la douille (18a) de l'organe perdu.

EP 0 191 383 B1

Fig.1

Fig. 2

Fig. 3

# FIG. 4